# EUROPEAN PATENT APPLICATION

(11) **EP 2 893 858 A1**
(43) Date of publication of application: **15.07.2015**
(21) Application number: 13835866.8
(22) Date of filing: 16.01.2013
(51) Int. Cl.: A47J 37/00, A21D 8/02, A47J 43/04

(54) **AUTOMATIC BREAD MAKING MACHINE**

(30) Priority: 06.09.2012 JP 2012195865
(71) Applicant: Panasonic Intellectual Property Management Co., Ltd., Osaka-shi, Osaka 540-6207 (JP)
(72) Inventor: UKIDA, Kazuhiro, Osaka 540-6207 (JP); TANASE, Takafumi, Osaka 540-6207 (JP); MAEDA, Toshikatsu, Osaka 540-6207 (JP); TAKECHI, Mitsuru, Osaka 540-6207 (JP); HORIUCHI, Miwa, Osaka 540-6207 (JP); TAKAHAMA, Atsumi, Osaka 540-6207 (JP); MITSUTAKE, Shinichirou, Osaka 540-6207 (JP); NAKAYAMA, Atsuo, Osaka 540-6207 (JP)
(74) Representative: Grünecker Patent- und Rechtsanwälte PartG mbB
(86) International application number: PCT/JP2013/000157
(87) International publication number: WO 2014/038103

(57) **Abstract**

An automatic bread machine of the invention includes a kneading container accommodated in a heating chamber disposed inside a machine main body and accommodating therein cooking ingredients, a kneading vane kneading the cooking ingredients in the kneading container by rotating in the kneading container, a motor generating a rotational driving force of the kneading vane, and a control unit that controls the motor such that the kneading vane executes a kneading process of kneading the cooking ingredients. The control unit controls such that the kneading process, a fermentation process, and a baking process are executed. The kneading process includes plural kneading time periods. A rotational velocity of the kneading vane is caused to differ between a first kneading time period of the kneading process and a kneading time period different from the first kneading time period.

## Description

### TECHNICAL FIELD

The invention relates to an automatic bread machine generally used in an ordinary household.

### BACKGROUND ART

Automatic bread machines having various structures are traditionally known as the automatic bread machine of this type (see, e.g., Patent Document 1: Japanese Unexamined Patent Publication No. 2002-360440).

The traditional automatic bread machine includes a kneading container accommodated in a heating chamber disposed inside the machine main body and accommodating therein cooking ingredients. A kneading vane is freely detachably attached in the kneading container. The kneading vane kneads the cooking ingredients in the kneading container by rotating in the kneading container. The rotation shaft of the kneading vane is connected to a driving shaft of a motor through a transmission mechanism that includes a driving pulley and a belt. The motor generates a rotational driving force of the kneading vane according to the control of a control unit.

The heating chamber has a heater to heat the kneading container according the control of the control unit and a temperature sensor to detect the temperature in the heating chamber, disposed therein. The machine main body has a selection unit disposed thereon that enables selection of a specific cooking course from plural cooking courses. The control unit controls the heater and the motor based on the cooking course selected at the selection unit and the detected temperature of a temperature detecting unit, and executes a bread-making process including a kneading process, a fermentation process, and a baking process.

### PRIOR ART DOCUMENT

Patent Document 1: Japanese Unexamined Patent Publication No. 2002-360440

### SUMMARY OF THE INVENTION

### Problem to be solved by the invention

However, the traditional automatic bread machine still has room for improvement from the viewpoint of further improving the doneness of the bread such as its eating quality and appearance.

An object of the invention is to solve the problem and is to provide an automatic bread machine capable of further improving the doneness of the bread.

### Means to Solve the Problem

To achieve the objective, the invention is configured as follow. The automatic bread machine according to the invention including:
a kneading container accommodated in a heating chamber disposed inside a machine main body and accommodating therein cooking ingredients;
a kneading vane that kneads the cooking ingredients in the kneading container by rotating in the kneading container;
a motor that generates a rotational driving force of the kneading vane; and
a control unit that controls the motor to execute a kneading process of kneading the cooking ingredients using the kneading vane, wherein
the control unit controls to execute the kneading process, a fermentation process, and a baking process,
the kneading process includes plural kneading time periods, and
a rotational velocity of the kneading vane is caused to differ between a first kneading time period of the kneading process and a kneading time period different from the first kneading time period.

### Effect of the Invention

According to the automatic bread machine of the invention, the doneness of the bread can further be improved.

### BRIEF DESCRIPTION OF THE DRAWINGS

These aspects and features of the invention will be apparent from the following description concerning a preferred embodiment with respect to the accompanying drawings, in which:
Fig. 1 is a vertical cross-sectional diagram of an automatic bread machine according to an embodiment of the invention; and
Fig. 2 is a graph of an example of variation of number of rotations of a motor in a kneading process.

### MODE FOR CARRYING OUT THE INVENTION

### (Finding to Be Base of Invention)

The inventors actively studied the cause of impossibility of acquiring any bread with desired doneness using a traditional automatic bread machine and, as a result, acquired the following findings.

It is generally known that the doneness of bread is determined mainly by the condition of the bread dough in the kneading process. When the condition of the bread dough is bad at the end of the kneading process, it is difficult to improve the doneness of the bread in the succeeding fermentation process and baking process. Therefore, the kneading process is the most important process that determined the doneness of the bread.

The kneading process is a process of producing the bread dough by kneading the cooking ingredients. When a person executes the kneading process with his/her hands, the person executes the following operations.

In the initial stage of the kneading process, powder such as flour and water to be the cooking ingredients are separate from each other, and therefore, an operation is executed of slowly mixing the powder and the water with each other for the overall powder to evenly include moisture. The cooking ingredients are changed to the bread dough by this operation.

When the bread dough is rapidly and strongly kneaded, the bread dough loses its cohesiveness. Therefore, the operation is executed of slowly kneading the bread dough. This operation causes gluten to be produced in the bread dough. When the temperature of the bread dough is excessively increased during this operation, gluten films formed in the bread dough tend to be cut. Therefore, it is important to prevent conduction of any heat of the hands and any heat generated by the kneading.

When gluten is produced to some extent and the bread dough has extensibility, an operation of strongly and firmly kneading the bread dough to further facilitate the formation of gluten. The condition of the bread dough varies depending on the production state of gluten. To improve the doneness of the bread, it is important to slowly knead the bread dough in the initial stage of the kneading process and to firmly knead the bread dough in the latter half of the kneading process.

When a person executes the kneading process with his/her hands, the person can visually and haptically check the condition of the bread dough. Therefore, the person executes the kneading process changing the manner of kneading corresponding to the condition of the bread dough without any special regard therefor. Thereby, the condition of the bread dough can be made excellent and the bread with desired doneness can be acquired.

On the other hand, the traditional automatic bread machine uses an induction motor as the motor to rotate the kneading vane, and changes the manner of kneading the bread dough by causing the induction motor to intermittently rotate or varying the driving time period thereof. The induction motor is a motor whose number of rotations is uniquely determined by the frequency of an AC power source. This motor is usually input with a constant driving voltage.

The inventors have found that the uniquely determined number of rotations of the motor is the cause of the degradation of the doneness of the bread. As to the traditional automatic bread machine, the number of rotations of the motor is uniquely determined during the overall time period of the kneading process and it is difficult to adjust the manner of kneading as adjusted when a person kneads the bread dough with his/her hands. For example, in the initial stage of the kneading process, the rotational velocity of the kneading vane is increased because the number of rotations of the motor is excessively great and, therefore, the powder may spatter or a phenomenon called "powder-remaining" may occur that the powder remains as it is absorbing no moisture due to uneven stirring of the powder and the water. For example, from the middle to the latter half of the kneading process, the rotational velocity of the kneading vane is decreased because the number of rotations of the motor is excessively small and, therefore, the kneading takes a long time and "insufficient kneading" may occur by an increase of the temperature of the bread dough. The phenomenon "insufficient kneading" dominantly occurs especially when the ambient temperature of the automatic bread machine is high.

The inventors have found that the constant driving voltage of the motor is the cause of the degradation of the doneness of the bread. For example, when the load on the kneading vane is large, the number of rotations of the motor becomes lower than a desired number of rotations and the rotational velocity of the kneading vane is decreased. Therefore, the bread dough cannot be kneaded in an intended manner of kneading.

The inventors has actively studied based on the above new findings and, as a result, has found that the doneness of the bread can further be improved by dividing the kneading process into plural kneading time periods and causing the rotational velocity of the kneading vane to differ between the first kneading time period and a time period different from the first kneading time period. Based on this point, the inventors have accomplished the invention as below.

According to a first aspect of the invention, there is provided an automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the control unit controls such that the kneading process, a fermentation process, and a baking process are executed,
the kneading process includes a plurality of kneading time periods, and a rotational velocity of the kneading vane is caused to differ between a first kneading time period of the kneading process and a kneading time period different from the first kneading time period.

According to a second aspect of the invention, there is provided an automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the control unit controls such that the kneading process, a fermentation process, and a baking process are executed,
the kneading process includes a plurality of kneading time periods, and
a rotational velocity of the kneading vane is caused to differ among the plurality of kneading time periods, and the rotational velocity of the kneading vane is set to be constant in each of the plurality of kneading time periods.

According to a third aspect of the invention, there is provided an automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the control unit controls a driving voltage of the motor such that the motor rotates at a first number of rotations for a time period set in advance from a start of the kneading process and the first number of rotations is maintained regardless of any variation of a load on the kneading vane, and
the control unit controls the driving voltage of the motor such that the motor rotates at a second number of rotations greater than the first number of rotations after the time period set in advance elapses and the second number of rotations is maintained regardless of any variation of the load on the kneading vane.

According to a fourth aspect of the invention, there is provided an automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the automatic bread machine further comprises
a converting unit that converts a frequency of a commercial power source into an arbitrary frequency, converts a voltage of the commercial power source into an arbitrary driving voltage, and outputs the converted frequency and the converted driving voltage to the motor, and
the control unit controls in the kneading process the converting unit to convert the frequency of the commercial power source into a frequency corresponding to a kneading condition of the cooking ingredients, and to vary the driving voltage after the conversion such that the motor rotates at number of rotations corresponding to the frequency after the conversion regard less of any variation of a load on the kneading vane.

According to a fifth aspect of the invention, there is provided the automatic bread machine of the fourth aspect, wherein
the control unit controls the converting unit such that the frequency after the conversion in an initial stage of the kneading process is lower than the frequency after the conversion in a time period other than the initial stage of the kneading process.

An embodiment of the invention will now be described with reference to the accompanying drawings.

### (Embodiment)

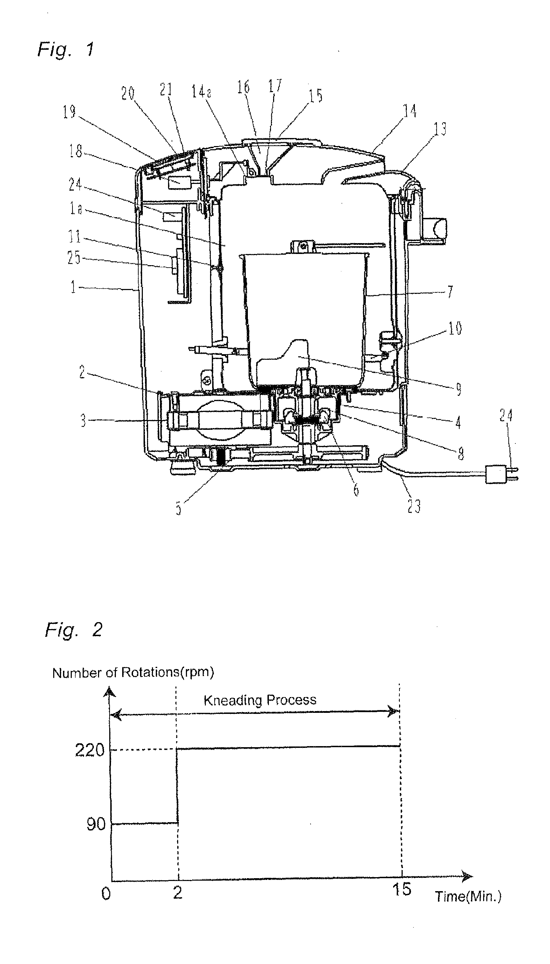

An overall configuration of an automatic bread machine according to an embodiment of the invention will be described. Fig. 1 is a vertical cross-sectional diagram of the automatic bread machine according to an embodiment of the invention.

In Fig. 1, the bread machine according to this embodiment includes a machine main body 1 made of a resin, having a shape of a cylinder with a bottom, and having a heating chamber 1a disposed therein. A chassis 2 is attached in the lower portion of the machine main body 1. The chassis 2 has a motor 3 to be an example of the driving unit, and a container supporting bed 4 attached thereto.

The motor 3 gives a rotational force to a connector lower portion 6 rotatably supported by the container supporting bed 4 through a transmission mechanism 5 including a pulley and a belt. The connector lower portion 6 is configured to be able to engage with a connector upper portion 8 rotatably supported in a lower portion of a kneading container 7. The kneading container 7 is accommodated in the heating chamber 1 a and is a detachable container to accommodate therein the cooking ingredients such as those for bread, a cake, or a rice cake. The kneading container 7 is configured to have no leaking of water. The kneading container 7 is attached onto the container supporting bed 4 by engagement of the connector lower portion 6 and the connector upper portion 8 with each other while the kneading container 7 is detached from the heating chamber 1 a by releasing the engagement of the connector lower portion 6 and the connector upper portion 8 with each other.

The connector upper portion 8 is attached such that the connecter upper portion 8 protrudes upward from the bottom wall of the kneading container 7. A tip of the connector upper portion 8 has a kneading vane 9 dechatably attached thereto to knead the cooking ingredients accommodated in the kneading container 7. The rotational force of the motor 3 is transmitted to the transmission mechanism 5 to rotate the connector lower portion 6 and the connector upper portion 8 and, thereby, the kneading vane 9 is driven to rotate.

Such components are disposed in the heating chamber 1 a as a heater 10 to be an example of the heating unit to heat the kneading container 7 and a temperature sensor 11 to be an example of the temperature detecting unit to detect the temperature in the heating chamber 1a. The heater 10 is disposed to surround with a gap the lower portion of the kneading container 7 attached onto the container supporting bed 4. For example, a sheathed heater is usable as the heater 10. The temperature sensor 11 is disposed at a position somewhat away from the heater 10 such that the temperature sensor 11 can detect an average temperature in the heating chamber 1a.

The upper portion of the machine main body 1 has a lid 13 rotatably attached thereon that can open or close a top opening of the main body 1. The lid 13 includes a lid main body 14 and an outer lid 15. The lid main body 14 has a yeast container 16 attached thereon that accommodates therein yeast. The yeast container 16 is disposed above the kneading container 7.

A bottom wall of the yeast container 16 includes an on-off valve 17 rotatably attached to a bottom wall 14a of the lid main body 14 such that the yeast accommodated in the yeast container 16 can be input into the kneading container 7. The on-off valve 17 is connected to a solenoid 18 and is opened by the driving of the solenoid 18. The outer lid 15 is attached to freely open or close the top opening of the yeast container 16.

Such components are disposed in the upper portion of the machine main body 1 as a selection unit 19 that enables selection of a specific cooking course from plural cooking courses, a displaying unit 20 that displays various types of information such as information selected at the selection unit 19, and a room temperature sensor 21 that detects the room temperature. The selection unit 19 is configured to be able also to execute starting or stopping of each of various types of operation, a setting of a timer, etc. The cooking courses include, for example, a sandwich loaf course, a pizza dough course, a Japanese udon noodle course, and a pasta course.

Such components are disposed in the machine main body 1 as a power supply cord 23 including an attachment plug 22 at a tip thereof, and a control unit 24 that controls driving of each of the units. Attaching the attachment plug 22 to an outlet not depicted causes the commercial power source to be supplied to the machine main body 1 through the power supply cord 23. The control unit 24 has cooking sequences stored therein that correspond to the plural cooking courses. The "cooking sequences" each refer to a program of a procedure for cooking including, for sequentially executing the cooking processes such as kneading, keeping the dough on the bench, fermentation, and baking, such items determined in advance in each of the cooking processes as an energizing time period of the heater 10, the temperature for temperature control, the rotational velocity of the kneading vane 9, and the driving timing for the solenoid 18. The control unit 24 controls the driving of each of the motor 3, the heater 10, and the solenoid 18 to open or close the on-off valve 17, based on the cooking sequence corresponding to the specific cooking course selected at the selection unit 19, and the temperature detected by the temperature sensor 11.

The automatic bread machine according to this embodiment includes a converting unit 25 that converts the frequency of the commercial power source into an arbitrary frequency, that converts the voltage of the commercial power source into an arbitrary driving voltage, and that outputs the converted frequency and the converted driving voltage to the motor 3.

The converting unit 25 includes, for example, a converter circuit that once converts the input commercial power source into a direct current, and an inverter circuit that thereafter converts the direct current into a desired frequency signal.

The control unit 24 controls the converting unit 25 to convert the frequency of the commercial power source into a frequency corresponding to the kneading state of the cooking ingredients in the kneading process. The control unit 24 controls the converting unit 25 to vary the driving voltage after the conversion such that the motor 3 rotates at the number of rotations corresponding to the frequency after the conversion regardless of any variation of the load on the kneading vane 9 in the kneading process.

The converting unit 25 varies, for example, the signal output in a PWM (Pulse Width Modulation) scheme according to the control by the control unit 24. For example, the converting unit 25 produces a pulse train according to on-off control executed for an IGBT (Insulated Gate Bipolar Transistor) included in the inverter circuit, and varies the voltage and the frequency of the signal output thereby according to the variation of the widths (on-duty time periods) of on-time periods.

The motor 3 has a rotation detecting element (not depicted) disposed therein such as a Hall sensor. The control unit 24 determines the current number of rotations of the motor 3 based on an output of the rotation detecting element. The "rotation number of rotation of the motor 3" means the number of rotations per unit time (for example, one min) of the motor 3 (that is, the rotational velocity of the motor 3).

An example will be described of a procedure and operations executed when a sandwich loaf is produced using the automatic bread machine according to this embodiment configured as above. The various types of operations of this automatic bread machine are executed under the control by the control unit 24.

A user first attaches the kneading vane 9 to the connector upper portion 8 and puts in the kneading container 7 all the materials for bread except the yeast such as flour, sugar, salt, skimmed milk, and water. The user thereafter sets the kneading container 7 on the container supporting bed 4 and closes the lid 13.

The user opens the outer lid 15, puts the yeast in the yeast container 16, and thereafter closes the outer lid 15.

The user selects the sandwich loaf course from the plural cooking courses at the selection unit 19 and thereafter instructs the start of the cooking by pressing a "start" button disposed on the selection unit 19, etc. Thereby, a cooking process for a sandwich loaf is started.

In this embodiment, the cooking process for a sandwich loaf includes three processes of the kneading process, the fermentation process, and the baking process. When the cooking process for a sandwich loaf is started, the kneading process is first started.

The kneading process is a process of producing bread dough by kneading the materials for bread in the kneading container 7 by rotating the kneading vane 9. In the middle of this kneading process, the solenoid 18 is operated and, thereby, the on-off valve 17 is opened to input the yeast input into the yeast container 16 into the kneading container 7. This input of the yeast is executed at a timing determined in the cooking sequence corresponding to the sandwich loaf course. When the kneading process comes to an end, the fermentation process is started.

The fermentation process is a process of raising the dough by fermenting the dough that includes the yeast. In the middle of this fermentation process, the dough is punched down to set the state of raising of the dough to be the optimal state. When the fermentation process comes to an end, the baking process is started.

The baking process is a process of baking the bread. In this baking process, the heater 10 is energized and the temperature of the heating chamber 1 a is increased to about 130 to 180°C. Thereby, the bread is baked.

The operations, their actions and effects of this automatic bread machine in the kneading process will be described in further detail.

In the initial stage of the kneading process, the powder such as flour and the water are separate from each other, that are the cooking ingredients. In this state, when the kneading vane 9 is rotated at a high velocity, the powder and the water may spatter out of the kneading container 7 or the "powder-remaining" may occur. In the case where the cooking ingredients are varied into the bread dough, when the kneading vane 9 is rapidly and strongly rotated, the bread dough loses its cohesiveness.

The control unit 24 of this automatic bread machine controls the motor 3 to rotate at a low velocity at a first number of rotations (for example, 90 rpm) for a time period set in advance (for example, two min) from the start of the kneading process. For example, the control unit 24 controls the converting unit 25 such that the frequency output to the motor 3 in the initial stage of the kneading process is lower than the frequency output to the motor 3 in the time periods other than the initial stage of the kneading process.

Thereby, the kneading vane 9 slowly rotates to cause the overall powder to evenly include moisture to mix the powder and the water, and the cooking ingredients are gradually varied into the bread dough. The spattering of the powder and the water, and occurrence of the "powder-remaining" can be suppressed.

Because the powder and the water are separate from each other in the initial stage of the kneading process, the load on the kneading vane 9 is very small. The bread dough becomes cohered and the load on the kneading vane 9 is increased, as the kneading process advances. The number of rotations of the motor 3 is reduced to that lower than the predetermined number of rotations (for example, 90 rpm). In this case, no desired bread dough can be acquired due to the insufficient rotations of the motor 3.

Therefore, the control unit 24 of this automatic bread machine controls the driving voltage of the motor 3 such that the first number of rotations (for example, 90 rpm) is maintained for a time period set in advance (for example, two min) from the start of the kneading process regardless of any variation of the load on the kneading vane 9 as depicted in Fig. 2. For example, the control unit 24 determines the current number of rotations of the motor 3 based on the output of a rotation detecting element (not depicted) disposed on the motor 3, and controls the converting unit 25 such that the driving voltage of the motor 3 is varied to maintain the number of rotations at the first number of rotations.

Thereby, the desired bread dough can always be acquired.

To improve the doneness of the bread, it is important to increase the degree of production of gluten in the bread dough. To increase the degree of production of gluten in the bread dough, it is effective to strongly and firmly knead the bread dough. When the temperature of the bread dough is excessively increased during this kneading, gluten films formed in the bread dough tend to be cut. Therefore, it is desirable to knead the bread dough in a short time period to prevent any heat from conducting to the bread dough.

The control unit 24 of this automatic bread machine controls the motor 3 to rotate at a high velocity at a second number of rotations (for example, 220 rpm) that is greater than the first number of rotations after a time period set in advance elapses from the start of the kneading process as depicted in Fig. 2. For example, the control unit 24 controls the converting unit 25 such that the frequency output to the motor 3 during a time period other than the initial stage of the kneading process (for example, for 13 min after the time period set in advance elapses) is higher than the frequency output to the motor 3 in the initial stage of the kneading process.

Thereby, the kneading vane 9 can strongly and firmly knead the bread dough in a short time period. As a result, the formation of gluten in the bread dough is facilitated and the degree of production of gluten in the bread dough can be increased. Especially, insufficient kneading can be solved that occurs when the ambient temperature is high. The bread dough can be completely kneaded before the temperature of the bread dough is excessively increased.

From the middle to the latter half of the kneading process, the bread dough becomes cohered and the load on the kneading vane 9 is further increased. The number of rotations of the motor 3 is reduced to that lower than the desired number of rotations (for example, 220 rpm) as the load is increased. In this case, the rotational velocity of the kneading vane 9 is reduced due to the insufficient rotations of the motor 3 and the condition of the bread dough can be set to be further optimal.

The control unit 24 of this automatic bread machine controls the driving voltage of the motor 3 such that the second number of rotations is maintained after the time period set in advance elapses regardless of any variation of the load on the kneading vane 9. For example, the control unit 24 determines the current number of rotations of the motor 3 based on the output of the rotation detecting element (not depicted) disposed on the motor 3, and controls the converting unit 25 such that the driving voltage of the motor 3 is varied to maintain the number of rotations at the second number of rotations.

Thereby, the condition of the bread dough can be set to be further optimal.

In the above, the manner of kneading by the kneading vane 9 is changed in the kneading process by varying the frequency output to the motor 3 and the driving voltage of the motor 3. However, the invention is not limited by this. The point is that the kneading process only has to be divided into the plural kneading time periods and the rotational velocity of the kneading vane 9 only has to be caused to differ between the first kneading time period of the kneading process and the kneading time periods different from the first kneading time period. Thereby, the desired bread dough can always be acquired. The rotational velocity of the kneading vane 9 only has to be caused to differ among the plural kneading time periods and the rotational velocity of the kneading vane 9 during each of the kneading time periods only has to be set to be constant. Thereby, the condition of the bread dough can be set to be further optimal.

Though the time period set in advance is exemplified as two min in the above, the invention is not limited by this. For example, the time period set in advance may also be one to six min.

Though the number of rotations of the motor 3 is switched between two stages in the kneading process in the above, the invention is not limited by this. For example, the kneading process may be divided into three or more kneading time periods and the number of rotations of the motor 3 may differ among the kneading time periods. For example, the number of rotations of the motor 3 may be set to be 90 rpm for one min and 30 sec from the start of the kneading process, 120 rpm for 30 sec thereafter, 180 rpm for three min thereafter, and 220 rpm for 12 min thereafter.

As to the traditional automatic bread machine, when the user sets the amount of the cooking ingredients to be excessively much, the bread rises exceeding the capacity of the heating chamber 1a and the bread may contact to the top face of the heating chamber 1 a. When the bread is baked in this state, the bread adheres to the top face of the heating chamber 1 a resulting in hard work to clean the top face. The bread dough may overflow from the kneading container 7 and may ferment, and the bread may be baked by directly receiving heat from the heater 10. In this case, the bread may get significantly burned and a large amount of smoke may be generated.

On the other hand, when the amount of the bread dough is excessively much, the load on the kneading vane 9 is increased in the kneading process. Therefore, the driving voltage of the motor 3 is increased when the control unit 24 controls the driving voltage of the motor 3 to maintain the first or the second number of rotations.

Using this, preferably, the control unit 24 determines that the amount of the bread dough is much when the driving voltage of the motor 3 is equal to or higher than a first threshold value set in advance, and controls to stop the driving of the motor 3. Thereby, the production of gluten can be suppressed by stopping the kneading operation by the kneading vane 9. As a result, the raise of the bread dough is reduced and the raise of the bread exceeding the capacity of the heating chamber 1 a can be prevented.

Any damage to the machine body can be prevented by stopping the kneading operation by the kneading vane 9 by the control of the control unit 24 as above even when the load on the kneading vane 9 is increased due to occurrence of any abnormality in the transmission mechanism 5 or mixing of any foreign object in the bread dough.

To improve the raise of the bread, it is effective to cause the kneading process to come to an end with a larger amount of produced gluten. When the kneading process is further continued with an amount of produced gluten exceeding a limit, the cross-bridging network of gluten is divided on the contrary, and the bread is not raised.

On the other hand, in the kneading process, the load on the kneading vane 9 is increased as the amount of produced gluten becomes larger. Therefore, the driving voltage of the motor 3 is increased when the control unit 24 controls the driving voltage of the motor 3 to maintain the first or the second number of rotations.

Using this, preferably, when the driving voltage of the motor 3 is equal to or higher than a second threshold value set in advance, the control unit 24 determines that the amount of produced gluten is equal to or larger than the desired amount and controls to cause the kneading process to come to an end. Thereby, the kneading process can come to an end with the larger amount of produced gluten. As a result, the raise of the bread can be improved and the doneness of the bread can further be improved.

The first threshold value is set to early stop the driving of the motor 3 with a small amount of produced gluten for the purpose of preventing excessive swelling of the bread. On the other hand, the second threshold value is set to cause the kneading process to come to an end with a large amount of produced gluten. Preferably, the first threshold value is set to be lower than the second threshold value.

In the above, the converting unit 25, the motor 3, and the controls unit 24 execute the control of the driving of the motor 3 in a what-is-called inverter scheme. However, the invention is not limited by this. Any other scheme may be used only when the scheme can control the number of rotations of the motor 3.

Although the invention has been fully described in connection with the preferred embodiment thereof with reference to the accompanying drawings, it is to be noted that various changes and modifications are apparent to those skilled in the art. Such changes and modifications are to be understood as included within the scope of the invention as defined by the appended claims unless they depart therefrom.

The entire disclosure of Japanese Patent Application No. 2012-195865 filed on September 6, 2012 including specification, drawings, and claims are incorporated herein by reference in its entirety.

### INDUSTRIAL APPLICABILITY

The automatic bread machine according to the invention is useful especially as a bread machine used in an ordinary household.

### Explanation of reference numerals

- 1: main body
- 1a: heating chamber
- 3: motor
- 5: transmission mechanism
- 7: kneading container
- 9: kneading vane
- 10: heater
- 11: temperature sensor
- 13: lid
- 19: selection unit
- 24: control unit
- 25: converting unit

## Claims

1. An automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the control unit controls such that the kneading process, a fermentation process, and a baking process are executed,
the kneading process includes a plurality of kneading time periods, and
a rotational velocity of the kneading vane is caused to differ between a first kneading time period of the kneading process and a kneading time period different from the first kneading time period.

2. An automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the control unit controls such that the kneading process, a fermentation process, and a baking process are executed,
the kneading process includes a plurality of kneading time periods, and
a rotational velocity of the kneading vane is caused to differ among the plurality of kneading time periods, and the rotational velocity of the kneading vane is set to be constant in each of the plurality of kneading time periods.

3. An automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the control unit controls a driving voltage of the motor such that the motor rotates at a first number of rotations for a time period set in advance from a start of the kneading process and the first number of rotations is maintained regardless of any variation of a load on the kneading vane, and
the control unit controls the driving voltage of the motor such that the motor rotates at a second number of rotations greater than the first number of rotations after the time period set in advance elapses and the second number of rotations is maintained regardless of any variation of the load on the kneading vane.

4. An automatic bread machine comprising:
a kneading container that is accommodated in a heating chamber disposed inside a machine main body, the kneading container accommodating therein cooking ingredients;
a kneading vane that kneads the cooking ingredients in the kneading container by rotating in the kneading container;
a motor to generate a rotational driving force of the kneading vane; and
a control unit that controls the motor such that the kneading vane executes a kneading process of kneading the cooking ingredients, wherein
the automatic bread machine further comprises
a converting unit that converts a frequency of a commercial power source into an arbitrary frequency, converts a voltage of the commercial power source into an arbitrary driving voltage, and outputs the converted frequency and the converted driving voltage to the motor, and
the control unit controls in the kneading process the converting unit to convert the frequency of the commercial power source into a frequency corresponding to a kneading condition of the cooking ingredients, and to vary the driving voltage after the conversion such that the motor rotates at number of rotations corresponding to the frequency after the conversion regard less of any variation of a load on the kneading vane.

5. The automatic bread machine according to claim 4, wherein
the control unit controls the converting unit such that the frequency after the conversion in an initial stage of the kneading process is lower than the frequency after the conversion in a time period other than the initial stage of the kneading process.
